# EUROPÄISCHE PATENTSCHRIFT

(11) **EP 3 314 732 B1**
(45) Veröffentlichungstag und Bekanntmachung des Hinweises auf die Patenterteilung: **24.03.2021**
(21) Anmeldenummer: 16728957.8
(22) Anmeldetag: 14.06.2016
(51) Int. Cl.: H02K 7/04, H02K 7/075, H02K 15/16, B27B 19/00, B24B 23/04, H02K 7/14, F16F 15/32

(54) **OSZILLIERENDES ELEKTROWERKZEUG MIT AUSGEWUCHTETER ANKERWELLE**
OSCILLATING POWER TOOL WITH BALANCED ARMATURE SHAFT
OUTIL ÉLECTRIQUE OSCILLANT COMPRENANT UN ARBRE D'INDUIT ÉQUILIBRÉ

(30) Priorität: 25.06.2015 DE 102015110266
(43) Veröffentlichungstag der Anmeldung: 02.05.2018
(73) Patentinhaber: C. & E. Fein GmbH, 73529 Schwäbisch Gmünd-Bargau (DE)
(72) Erfinder: BLICKLE, Juergen, 73035 Goeppingen (DE); HESS, Achim, 71404 Korb (DE); KLABUNDE, Olaf, 89537 Giengen (DE)
(74) Vertreter: Wallinger, Michael
(86) Internationale Anmeldenummer: PCT/EP2016/063597
(87) Internationale Veröffentlichungsnummer: WO 2016/207024

(56) Entgegenhaltungen:
- EP-A1- 0 660 491
- EP-A1- 3 144 110
- JP-A- 2008 038 893
- US-A1- 2004 082 283
- US-A1- 2011 067 894

## Beschreibung

Die Erfindung betrifft ein oszillierendes Elektrowerkzeug, mit einem Elektromotor, der eine Ankerwelle mit einem Anker und einem Lüfterrad aufweist, mit einem auf der Ankerwelle angeordneten Exzenter an einem Ende der Ankerwelle, mit einer ersten Ausgleichsmasse zum Ausgleich einer Unwucht des Exzenters, die in der Nähe des Exzenters, jedoch axial davon beabstandet, angeordnet ist, und mit einer zweiten Ausgleichmasse zum Ausgleich einer durch den axialen Abstand zwischen Exzenter und erstem Ausgleichsgewicht bedingten Momentenunwucht.

Die Erfindung betrifft ferner ein Verfahren zum Auswuchten eines Elektromotors für ein Elektrowerkzeug, der eine Ankerwelle mit einem Anker und einem Lüfterrad aufweist, mit einem auf der Ankerwelle angeordneten Exzenter an einem Ende der Ankerwelle.

Oszillierende Elektrowerkzeuge weisen einen Exzenterkoppeltrieb zur Umsetzung der Rotationsbewegung der Ankerwelle eines Motors in eine um die Längsachse oszillierende Abtriebsbewegung einer Werkzeugsspindel auf. Hierbei ist in der Regel ein Exzenter unmittelbar auf der Ankerwelle des Motors vorgesehen. Der Exzenter wirkt mit einem Exzenterhebel zusammen, um eine drehoszillierende Bewegung der Werkzeugspindel zu bewirken.

Es versteht sich, dass die Ankerwelle ausgewuchtet sein muss. Hierzu ist in der Regel eine Ausgleichsmasse zum Ausgleich der Unwucht des Exzenters unmittelbar angrenzend an den Exzenter vorgesehen. Durch den Axialversatz zwischen dem Exzenter und der Ausgleichsmasse entsteht allerdings eine Momentenunwucht, die zusätzlich ausgeglichen werden muss. Hierzu kann eine weitere Ausgleichsmasse vorgesehen sein oder aber das Lüfterrad, das ebenfalls auf der Abtriebsseite angeordnet ist, entsprechend unwuchtig ausgebildet werden.

Die US 2011/0067894 A1 zeigt ein oszillierendes Werkzeug mit einem Elektromotor, bei dem zwei Ausgleichsgewichte verwendet werden, die auf einem gemeinsamen Bauteil ausgebildet sind, das unmittelbar benachbart zu dem Exzenter angeordnet ist.

Die JP 2008 38893 zeigt ferner einen hermetischen Kompressor, bei dem Ausgleichsgewichte an dem Ankerblechpaket befestigt sind.

Die nachveröffentlichte EP 3 144 110 A1 zeigt ein oszillierendes Elektrowerkzeug, bei dem Ausgleichsgewichte vorgehsehen sind, die an den äußeren Enden der Ankerwelle angeordnet sind.

Aus der US 2004/082283 A1 ist ein Schwingschleifer bekannt, bei dem neben Ausgleichsgewichten zusätzlich automatische Auswuchter vorgesehen sind, um zusätzliche Unwuchten auszugleichen, die durch Über- oder Unterbelastung des Schleifmittels entstehen.

Problematisch ist bei den bekannten Lösungen, dass mit zunehmender Motorleistung die Größe des Exzenters und eines gegebenenfalls darauf angeordneten Exzenterlagers zunimmt. Die durch den Längenversatz zwischen Exzenter und Ausgleichsgewicht und/ oder Lüfter entlang der Ankerwelle bedingte Momentenunwucht wird meist ausgeglichen, indem am Ankerblechpaket geeignete Vertiefungen eingebracht werden.

Bei Maschinen höher Leistung wird allerdings eine Auswuchtung zunehmend kompliziert. Ein Abfräsen des Ankerblechpakets reicht vielfach nicht mehr aus, um die notwendige Auswuchtung zu erreichen.

Vor diesem Hintergrund liegt der Erfindung die Aufgabe zugrunde, bei einem oszillierenden Elektrowerkzeug gemäß der eingangsgenannten Art auf einfache und zuverlässige Weise eine Auswuchtung der Ankerwelle zu gewährleisten.

Ferner soll ein Verfahren zum Auswuchten eines Elektromotors für ein oszillierendes Elektrowerkzeug angegeben werden.

Diese Aufgabe wird bei einem oszillierenden Elektrowerkzeug gemäß der eingangsgenannten Art erfindungsgemäß durch die Merkmale des Anspruchs 1 gelöst.

Die Aufgabe der Erfindung wird ferner durch ein Verfahren zum Auswuchten eines Elektromotors für ein Elektrowerkzeug gemäß Anspruch 6 gelöst.

Die Aufgabe der Erfindung wird auf diese Weise gelöst.

Da erfindungsgemäß die zweite Ausgleichsmasse auf einer dem Exzenter abgewandten Seite der Ankerwelle angeordnet ist, ergibt sich ein großer Abstand zwischen Exzenter bzw. erster Ausgleichsmasse und der zweiten Ausgleichsmasse. Infolge des so entstehenden großen Hebels ist zum Ausgleich der Momentenunwucht nur eine relativ kleine zweite Ausgleichsmasse erforderlich. Somit kann auch bei hohen Antriebsleistungen eine einfache und zuverlässige Auswuchtung der Ankerwelle mit Exzenter und gegebenenfalls Exzenterlager gewährleistet werden.

Gemäß einer weiteren Ausgestaltung der Erfindung ist auf dem Exzenter ein Exzenterlager aufgenommen, wobei die erste Ausgleichsmasse zum Ausgleich der Unwucht von Exzenter und Exzenterlager ausgebildet ist, und wobei die zweite Ausgleichsmasse zum Ausgleich der verbleibenden Momentenunwucht ausgebildet ist.

Auch bei einem derartigen Aufbau kann auf die Weise ein Ausgleich der Momentenunwucht gewährleistet werden.

Gemäß einer weiteren Ausgestaltung der Erfindung ist die erste Ausgleichsmasse als erste Wuchtscheibe ausgebildet, die neben dem Exzenter auf der Ankerwelle angeordnet ist.

Auf diese Weise ergibt sich ein einfacher Aufbau, und wegen der unmittelbaren Anordnung der ersten Wuchtscheibe neben dem Exzenter wird die entstehende Momentenunwucht so gering wie möglich gehalten.

Gemäß einer weiteren Ausgestaltung der Erfindung ist die zweite Ausgleichsmasse als zweite Wuchtscheibe ausgebildet, die auf der Ankerwelle angeordnet ist.

Auf diese Weise wird eine einfache Anordnung der zweiten Ausgleichsmasse auf der Ankerwelle ermöglicht.

In weiter bevorzugter Ausführung der Erfindung besteht die zweite Ausgleichsmasse aus einem elektrisch nicht leitenden Werkstoff, bevorzugt aus Kunststoff.

Diese Ausführung hat den Vorteil, dass durch den isolierenden Werkstoff die elektrische Sicherheit nicht gefährdet wird, selbst dann, wenn sich die zweite Ausgleichsmasse unmittelbar neben einem Kommutator im Falle eines Kommutatormotors befindet.

Bei dem erfindungsgemäßen Verfahren wird vorzugsweise auf dem Exzenter ein Exzenterlager montiert, bevor das Auswuchten auf der Wuchtmaschine erfolgt.

Auf diese Weise ist im Falle einer Ausführung eines Exzenterkoppeltriebs mit einem Exzenterlager auf dem Exzenter eine Auswuchtung der durch das Exzenterlager bedingten Unwucht gewährleistet.

Gemäß einer weiteren Ausgestaltung der Erfindung werden auf der Ankerwelle zwei Ankerlager montiert, bevor das Auswuchten auf der Wuchtmaschine erfolgt.

Bei dieser Ausführung werden eventuelle durch die Ankerlager bedingte Unwuchten gleichfalls mit ausgewuchtet.

In weiterer Ausgestaltung des erfindungsgemäßen Verfahren wird eine erste Ausgleichsmasse in Form einer Wuchtscheibe verwendet, die vorzugsweise neben dem Exzenter angeordnet wird.

Auf diese Weise wird ein einfacher Aufbau und eine möglichst geringe Momentenunwucht gewährleistet.

Wie vorstehend bereits erwähnt wird als zweite Ausgleichsmasse bevorzugt eine Wuchtscheibe aus einem elektrisch nicht leitenden Werkstoff, vorzugsweise aus einem Kunststoff verwendet.

Es versteht sich, dass die vorstehend genannten und die nachstehend noch zu erläuternden Merkmalen der Erfindung nicht nur in der jeweils angegebenen Kombination, sondern auch in anderen Kombination oder in Alleinstellung verwendbar sind ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine perspektivische Darstellung eines Elektrowerkzeuges mit einem erfindungsgemäßen Antrieb;
- Fig. 2: eine vereinfachte schematische Darstellung des Elektrowerkzeugs gemäß Fig. 1 mit der Werkzeugspindel, dem Elektromotor und dem Oszillationsantrieb;
- Fig. 3: eine vergrößerte perspektivische Darstellung der Ankerwelle des Motors mit darauf montiertem Anker und Lüfterrad, zwei Ausgleichsgewichten und Exzenterlager;
- Fig. 4: eine Seitenansicht der komplettierten Ankerwelle gemäß Fig. 3 wobei zusätzlich an dem Exzenterlager gegenüberliegenden Ende noch ein Ankerlager mit dargestellt ist;
- Fig. 5: eine perspektivische Ansicht der zweiten Ausgleichsmasse gemäß Fig. 3;
- Fig. 6: einen Schnitt gemäß der Linie VI/ VI gemäß Fig. 4;
- Fig. 7: eine Ansicht des komplettierten Ankers gemäß Fig. 3 von der Exzenterseite aus gesehen und
- Fig. 8: eine vereinfachte schematische Darstellung einer Wuchtmaschine zum Auswuchten der komplettierten Ankerwelle.

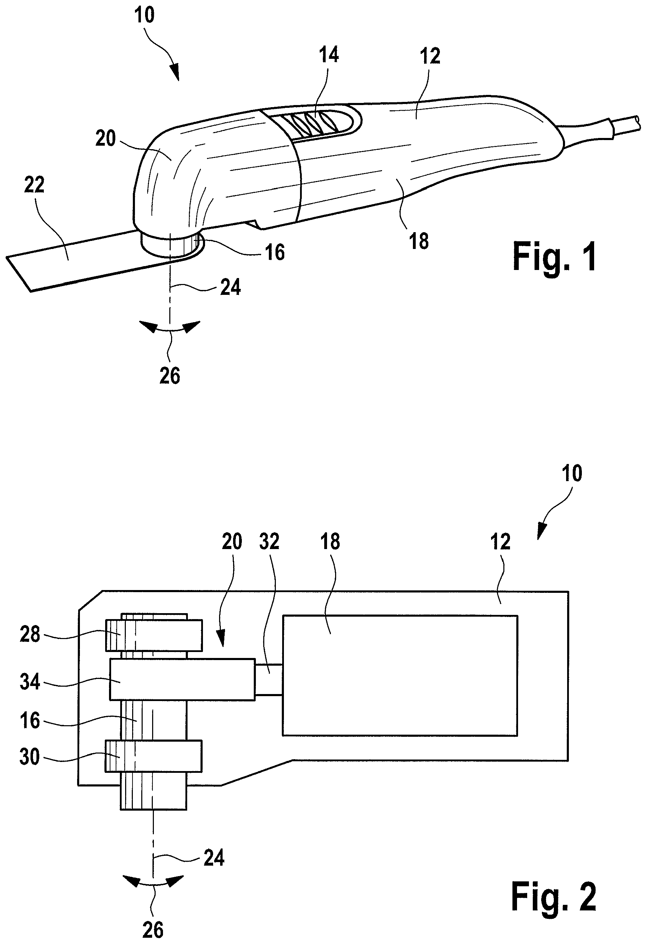

In Fig. 1 ist ein erfindungsgemäßes Elektrowerkzeug perspektivisch dargestellt und insgesamt mit der Ziffer 10 bezeichnet.

Das Elektrowerkzeug 10 weist ein längliches Gehäuse 12 auf, das mit einer Hand umgreifbar ist und an dessen Oberseite ein Schalter 14 zum Ein- und Ausschalten des Elektrowerkzeugs 10 angeordnet ist. Im hinteren Teil des Gehäuses ist ein Elektromotor aufgenommen, der lediglich mit der Ziffer 18 angedeutet ist. Im vorderen Teil des Gehäuses ist mit der Ziffer 20 ein Exzenterkoppeltrieb angedeutet, der eine rotierende Antriebsbewegung des Elektromotors 18 in eine drehoszillierende Antriebsbewegung einer Werkzeugsspindel 16 umsetzt, die winklig aus dem Ende des Gehäuses 12 nach unten hervorsteht. Der Exzenterkoppeltrieb 20 ist derart ausgebildet, dass sich die Werkzeugspindel 16 mit hoher Frequenz, in der Regel im Bereich von 5 000 bis 25 000 Oszillationen pro Minute, und geringem Verschwenkwinkel, in der Regel im Bereich von 0,5 bis 3 Grad, um eine Längsachse 24 der Werkzeugspindel 16 hin und her bewegt, wie durch den Doppelpfeil 26 angedeutet ist.

Am Ende der Werkzeugspindel 16 kann ein Werkzeug 22 auswechselbar befestigt werden, wie hier beispielhaft durch ein Sägewerkzeug 22 angedeutet ist.

In Fig. 2 ist das Elektrowerkzeug 10 vereinfacht schematisch dargestellt. Der Elektromotor 18 treibt über den Exzenterkoppeltrieb 20 die Werkzeugspindel 16 drehoszillierend um die Längsachse 24 an. Die Werkzeugspindel 16 ist mittels zweier Lager 28, 30 im Gehäuse 12 gelagert. Der Exzenterkoppeltrieb 20 weist einen Exzenter 32 auf, der unmittelbar am Elektromotor 18 ausgebildet ist, wie nachfolgend noch näher beschrieben wird. Der Exzenter 32 wirkt mit einem Exzenterhebel 34 zusammen, über den die rotierende Antriebsbewegung des Elektromotors 18 in die Oszillationsbewegung der Werkzeugsspindel 16 umgesetzt wird.

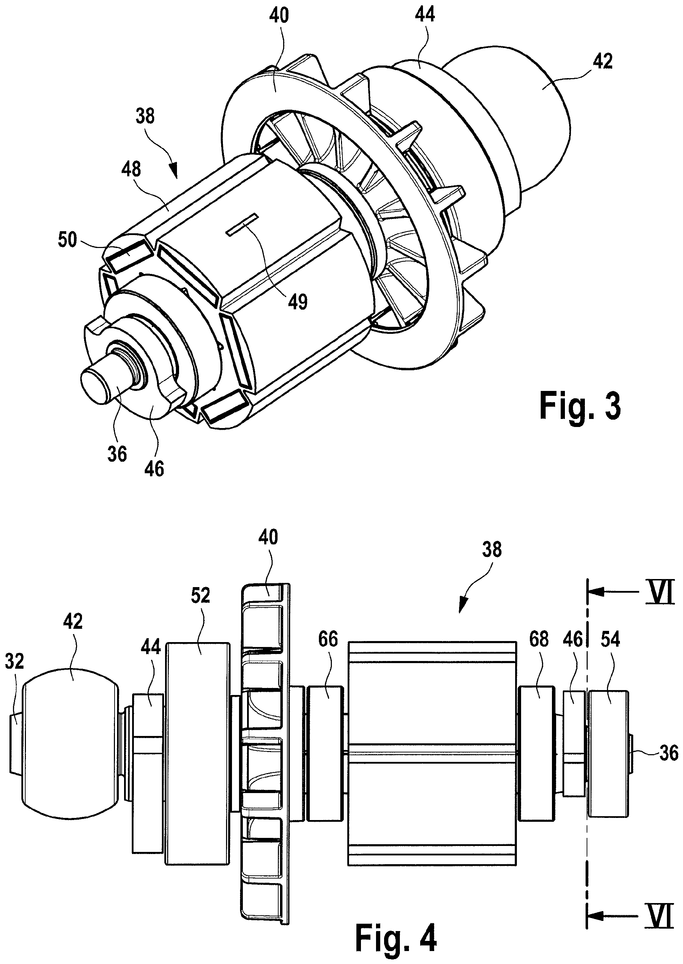

Wie aus den Figuren 3 und 4 zu ersehen ist, weist der Elektromotor 18 eine Ankerwelle 36 auf, an deren einem, abtriebsseitigen Ende der Exzenter 32 einstückig mit der Ankerwelle 36 ausgebildet ist. Auf dem Exzenter 32 ist ein Exzenterlager 42 gehalten, dass einen balligen Außenring aufweist und das von einem gabelförmigen Ende des Exzenterhebels 34 umschlossen ist. Direkt neben dem Exzenterlager 42 bzw. dem Exzenter 32 ist eine erste Ausgleichsmasse in Form einer ersten Wuchtscheibe 44 auf der Ankerwelle 36 angeordnet. Die erste Ausgleichsmasse 44 dient zum Ausgleich der durch den Exzenter 32 und das Exzenterlager 42 bedingten Unwucht.

Da die erste Ausgleichsmasse 44 in Längsrichtung der Ankerwelle 36 gegenüber der durch den Exzenter 32 und das Exzenterlager 42 bedingten Unwucht axialverschoben angeordnet ist, ergibt sich eine Momentenunwucht, die zusätzlich ausgeglichen werden muss.

Erfindungsgemäß ist hierzu ein zweites Ausgleichsgewicht in Form einer zweiten Wuchtscheibe 46 vorgesehen, die im Bereich des gegenüberliegenden Endes der Ankerwelle 36 angeordnet ist. Angrenzend an die erste Ausgleichsmasse 44 ist ein erstes Lager 52 auf der Ankerwelle 36 angeordnet. Am gegenüberliegenden Ende der Ankerwelle 36 ist ein zweites Lager 54 vorgesehen. Angrenzend an das erste Lager 52 ist das Lüfterrad 40 auf der Ankerwelle 36 angeordnet.

Zwischen dem zweiten Lager 54 am Ende der Ankerwelle 36 und der daneben angeordneten zweiten Ausgleichsmasse 46 befindet sich der Anker 38 mit Ankerblechpaket 48 (vgl. Fig. 3) und daran aufgenommenen Ankerwicklungen 50. Am Ankerblechpaket 48 können ferner Wuchtvertiefungen 49 vorgesehen sein, wie in Fig. 3 beispielhaft dargestellt ist.

Optional können zusätzlich angrenzend an das Ankerblechpaket 48 Auswuchtringe 66, 68 angeordnet sein, wie in Fig. 4 dargestellt ist. Die Verwendung von Auswuchtringen 66, 68 ist dann sinnvoll, wenn der Elektromotor 12 als EC-Motor ausgebildet ist. In diesem Fall kann nämlich die Auswuchtung nicht unmittelbar auf dem Ankerblechpaket 48 erfolgen, da bei 50 dann anstelle von Wicklungen Permanentmagnete aufgenommen wären. In diesem Fall erfolgt die Auswuchtung dann an den Auswuchtringen 66, 68.

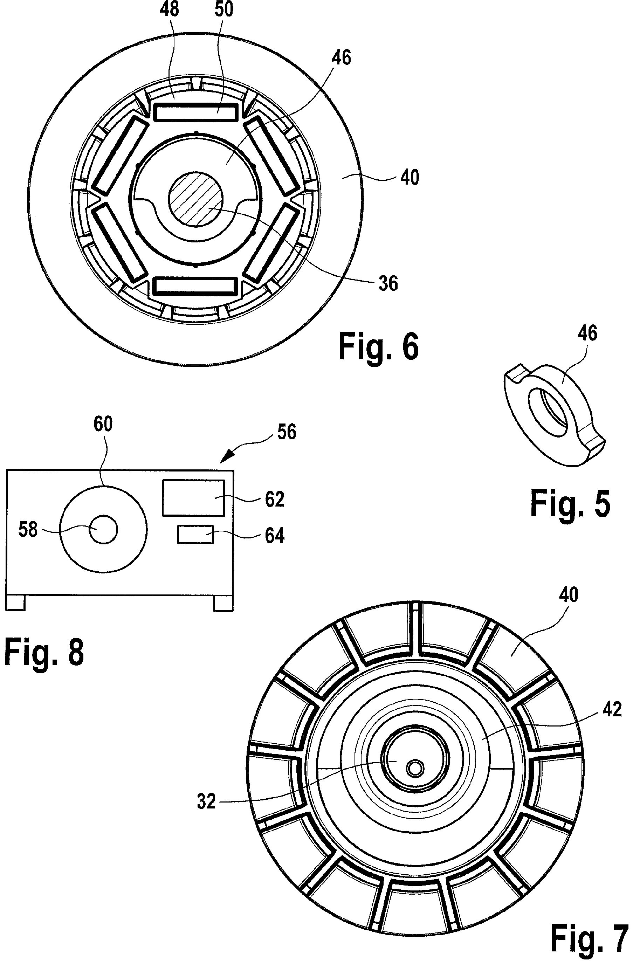

Die zweite Ausgleichsmasse 46 in Form der Wuchtscheibe ist in Fig. 5 nochmals vergrößert dargestellt.

Die Figuren 6 und 7 zeigen einen Schnitt durch den Anker gemäß Fig. 4 längs der Linie VI-VI bzw. eine Endansicht der Ankerwelle 36 vom Exzenter 32 aus gesehen.

Die zweite Wuchtscheibe 46 dient zum Ausgleich der Momentenunwucht, die durch den Axialversatz zwischen Exzenter 32 und Exzenterlager 42 sowie der ersten Ausgleichsmasse 44 bedingt ist.

Da sich die zweite Ausgleichsmasse 46 in einem großen axialen Abstand von dem Exzenter 32, dem Exzenterlager 42 und der ersten Ausgleichsmasse 44 befindet, ist nur eine relativ kleine Masse ausreichend, um die Momentenunwucht auszugleichen.

Vorzugsweise besteht die zweite Ausgleichsmasse 46 aus einem elektrisch isolierenden Material in Form eines Kunststoffs.

Dies hat den Vorteil, dass die elektrische Sicherheit hiervon in keiner Weise beeinträchtigt wird. Im vorliegenden Fall ist der Elektromotor 18 als EC-Motor ausgebildet, so dass dieser keinen Kommutator aufweist.

Handelt es sich jedoch um einen herkömmlichen Universalmotor mit einem Kommutator, so befindet sich die zweite Ausgleichsmasse in unmittelbarer Nähe des Kommutators. Auch in diesem Fall ist die Ausgestaltung der zweiten Ausgleichsmasse aus Kunststoff besonders vorteilhaft, da hierdurch die elektrische Sicherheit auch in Falle von Kommutatorfeuer in keiner Weise beeinträchtigt wird.

Um einen wuchtfreien Lauf der Ankerwelle 36 zu gewährleisten, wird die vollständig komplettierte Ankerwelle gemäß Fig. 3 bzw. Fig. 4 auf einer Wuchtmaschine eingespannt und dynamisch ausgewuchtet.

Eine derartige Wuchtmaschine 56 ist schematisch in Fig. 8 angedeutet. Die Wuchtmaschine 56 weist eine Aufnahme 58 zum Einspannen der Ankerwelle 36 auf, sowie ein Schutzblech 60, das über die Ankerwelle 36 aus Sicherheitsgründen während des Auswuchtvorgangs geschoben werden kann. Mittels einer elektronischen Steuerung 64 wird die Wuchtmaschine 56 gesteuert. Auf einer Anzeige 62 wird die genaue Lage und Größe einer ermittelten Unwucht angezeigt, so dass unmittelbar ersichtlich ist, an welcher Stelle des Blechpaketes 48 eine Ausfräsung oder Wuchtvertiefung in welcher Größe anzubringen ist.

Eine derartige Ausfräsung 49, die mittels einer zugeordneten Fräseinheit (nicht dargestellt) angebracht werden kann, ist beispielhaft in Fig. 3 dargestellt.

Auf diese Weise wird ein statisch und dynamisch ausgewuchteter Lauf der Ankerwelle 36 gewährleistet.

## Patentansprüche

1. Oszillierendes Elektrowerkzeug, mit einem Elektromotor (12), der eine Ankerwelle (36) mit einem Anker (38) mit einem Ankerblechpaket (48) und einem Lüfterrad (40) aufweist, mit einem auf der Ankerwelle (36) angeordneten Exzenter (32) an einem Ende der Ankerwelle (36), mit einer ersten Ausgleichsmasse (44), die in der Nähe des Exzenters (32), jedoch axial davon beabstandet, angeordnet ist, und mit einer zweiten Ausgleichsmasse (46), mit einem ersten Lager (52), das auf der Ankerwelle (36) zwischen dem Lüfterrad (40) und der ersten Ausgleichsmasse (44) angeordnet ist, wobei die zweite Ausgleichsmasse (46) an einem dem Exzenter (32) abgewandten Ende auf der Ankerwelle (36) zwischen einem zweiten Lager (54) und dem Anker (38) angeordnet ist, und wobei die erste Ausgleichsmasse (44) als erste Wuchtscheibe ausgebildet ist, die neben dem Exzenter (32) auf der Ankerwelle (36) angeordnet ist, und wobei auf dem Exzenter (32) ein Exzenterlager (42) aufgenommen ist, und wobei die erste Ausgleichsmasse (44) zum Ausgleich der Unwucht von Exzenter (32) und Exzenterlager (42) ausgebildet ist, und die zweite Ausgleichsmasse (46) zum Ausgleich der durch den axialen Abstand zwischen Exzenter (32) und erstem Ausgleichsmasse (44) bedingten Momentenunwucht verbleibenden Momentenunwucht ausgebildet ist.

2. Elektrowerkzeug nach Anspruch 1, **dadurch gekennzeichnet, dass** angrenzend an das Ankerblechpaket (48) Auswuchtringe (66, 68) angeordnet sind.

3. Elektrowerkzeug nach Anspruch 1 oder 2, **dadurch gekennzeichnet, dass** die zweite Ausgleichsmasse (46) als zweite Wuchtscheibe ausgebildet ist, die auf der Ankerwelle (36) angeordnet ist.

4. Elektrowerkzeug nach einem der Ansprüche 1 bis 3, **dadurch gekennzeichnet, dass** die zweite Ausgleichsmasse (46) aus einem elektrisch nicht leitenden Werkstoff besteht.

5. Elektrowerkzeug nach Anspruch 4, **dadurch gekennzeichnet, dass** die zweite Ausgleichsmasse (46) aus Kunststoff besteht.

6. Verfahren zum Auswuchten eines Elektromotors (12) für ein Elektrowerkzeug (10) nach einem der Ansprüche 1 bis 5, der eine Ankerwelle (36) mit einem Anker (38) und einem Lüfterrad (40) aufweist, mit einem auf der Ankerwelle (36) angeordneten Exzenter (32) an einem Ende der Ankerwelle (36), mit den folgenden Schritten:
- Bereitstellen einer Ankerwelle (36) mit einem Exzenter (32) an einem Ende;
- Montieren einer ersten Ausgleichsmasse (44) in Form einer Wuchtscheibe, die neben dem Exzenter (32) angeordnet wird zum Ausgleich der Unwucht des Exzenters (32), eines Exzenterlagers (42) auf dem Exzenter (32), eines Ankerblechpakets (48) mit Ankerwicklungen (50), eines Lüfterrads (40), eines ersten Lagers (52), das auf der Ankerwelle (36) zwischen dem Lüfterrad (40) und der ersten Ausgleichsmasse (44) angeordnet ist, und einer zweiten Ausgleichsmasse (46) auf der Ankerwelle (36), wobei die zweite Ausgleichsmasse (46) auf einem dem Exzenter (32) abgewandten Ende der Ankerwelle (36) zwischen einem zweiten Lager (54) und dem Anker (38) angeordnet wird und zum Ausgleich einer durch den axialen Abstand zwischen Exzenter (32) und erster Ausgleichsmasse (44) bedingten Momentenunwucht auf der Ankerwelle (36) ausgerichtet wird;
- Einspannen der Ankerwelle (36) auf einer Wuchtmaschine (56);
- Antreiben der Ankerwelle (36) auf der Wuchtmaschine (44) zum Auswuchten;
- Erzeugen von Signalen zur Vorgabe von Größe und Position von Aussparung(en) (49) an der Ankerwelle (36) oder auf angrenzend an das Ankerblechpaket (48) angeordneten Auswuchtringen (66, 68);
- Einbringen von Aussparung(en) (49) in die Ankerwelle (36), insbesondere in das Ankerblechpaket (48) oder in die Auswuchtringe (66, 68), gemäß der Signale, soweit erforderlich.

7. Verfahren nach Anspruch 6, bei dem die zweite Ausgleichsmasse (46) in Form einer Wuchtscheibe aus einem elektrisch nicht leitenden Werkstoff, vorzugsweise aus einem Kunststoff, verwendet wird.

## Claims

1. Oscillating power tool, having an electric motor (12) which has an armature shaft (36) having an armature (38) with an armature core (48) and a fan wheel (40), having an eccentric (32) arranged on the armature shaft (36) at one end of the armature shaft (36), having a first balancing mass (44) which is arranged in the proximity of the eccentric (32) but at an axial distance therefrom, and having a second balancing mass (46), having a first bearing (52) which is arranged on the armature shaft (36) between the fan wheel (40) and the first balancing mass (44), wherein the second balancing mass (46) is arranged at an end facing away from the eccentric (32) on the armature shaft (36) between a second bearing (54) and the armature (38), and wherein the first balancing mass (44) is configured as a first balancing disc which is arranged adjacent to the eccentric (32) on the armature shaft (36), and wherein an eccentric bearing (42) is received on the eccentric (32), and wherein the first balancing mass (44) is configured to balance the unbalance of the eccentric (32) and eccentric bearing (42), and the second balancing mass (46) is configured to balance the remaining couple unbalance caused by the axial distance between the eccentric (32) and the first balancing weight (44).

2. Power tool according to claim 1, **characterised in that** balancing rings (66, 68) are arranged adjacent to the armature core (48).

3. Power tool according to claim 1 or 2, **characterised in that** the second balancing mass (46) is configured as a second balancing disc which is arranged on the armature shaft (36).

4. Power tool according to any of claims 1 to 3, **characterised in that** the second balancing mass (46) consists of an electrically non-conducting material.

5. Power tool according to claim 4, **characterised in that** the second balancing mass (46) consists of plastic.

6. Method for balancing an electric motor (12) for a power tool (10) according to any of claims 1 to 5, which has an armature shaft (36) with an armature (38) and a fan wheel (40), having an eccentric (32) arranged on the armature shaft (36) at one end of the armature shaft (36), with the following steps:
- providing an armature shaft (36) having an eccentric (32) at one end;
- mounting a first balancing mass (44) in the form of a balancing ring which is arranged adjacent to the eccentric (32) for balancing the unbalance of the eccentric (32), an eccentric bearing (42) on the eccentric (32), an armature core (48) having armature windings (50), a fan wheel (40),a first bearing (52) which is arranged on the armature shaft (36) between the fan wheel (40) and the first balancing mass (44), and a second balancing mass (46) on the armature shaft (36), wherein the second balancing mass (46) is arranged on an end of the armature shaft (36) facing away from the eccentric (32) between a second bearing (54) and the armature (38) and is oriented on the armature shaft (36) so as to balance a couple unbalance caused by the axial distance between the eccentric (32) and the first balancing mass (44);
- clamping the armature shaft (36) on a balancing machine (56);
- driving the armature shaft (36) on the balancing machine (44) for balancing;
- generating signals for specifying the size and position of recess(es) (49) on the armature shaft (36) or on balancing rings (66, 68) arranged adjacent to the armature core (48);
- introducing recess(es) (49) into the armature shaft (36), in particular into the armature core (48) or into the balancing rings (66, 68), according to the signals, if necessary.

7. Method according to claim 6, in which the second balancing mass (46) is used in the form of a balancing disc made of an electrically non-conducting material, preferably made of a plastic.

## Revendications

1. Outil électrique oscillant, avec un moteur électrique (12), qui présente un arbre d'induit (36) avec un induit (38) avec un paquet de tôle d'induit (48) et une roue de ventilateur (40), avec un excentrique (32) disposé sur l'arbre d'induit (36) à une extrémité de l'arbre d'induit (36), avec une première masse d'équilibrage (44), qui est disposée à proximité de l'excentrique (32), mais à distance axiale de celui-ci, et avec une seconde masse d'équilibrage (46), avec un premier palier (52), qui est disposé sur l'arbre d'induit (36) entre la roue de ventilateur (40) et la première masse d'équilibrage (44), dans lequel la seconde masse d'équilibrage (46) est disposée à une extrémité opposée à l'excentrique (32) sur l'arbre d'induit (36) entre un second palier (54) et l'induit (38), et dans lequel la première masse d'équilibrage (44) est conçue en tant que premier disque d'équilibrage qui est disposé à côté de l'excentrique (32) sur l'arbre d'induit (36), et dans lequel un palier d'excentrique (42) est reçu sur l'excentrique (32), et dans lequel la première masse d'équilibrage (44) est conçue pour équilibrer le déséquilibre de l'excentrique (32) et du palier d'excentrique (42), et la seconde masse d'équilibrage (46) est conçue pour équilibrer le déséquilibre de couple restant dû au déséquilibre de couple causé par la distance axiale entre l'excentrique (32) et la première masse d'équilibrage (44).

2. Outil électrique selon la revendication 1, **caractérisé en ce que** des bagues d'équilibrage (66, 68) sont disposées adjacentes au paquet de tôle d'induit (48).

3. Outil électrique selon la revendication 1 ou 2, **caractérisé en ce que** la seconde masse d'équilibrage (46) est conçue en tant que second disque d'équilibrage qui est disposé sur l'arbre d'induit (36).

4. Outil électrique selon l'une quelconque des revendications 1 à 3, **caractérisé en ce que** la seconde masse d'équilibrage (46) est constituée d'un matériau électriquement non conducteur.

5. Outil électrique selon la revendication 4, **caractérisé en ce que** la seconde masse d'équilibrage (46) est constituée de plastique.

6. Procédé pour équilibrer un moteur électrique (12) pour un outil électrique (10) selon l'une quelconque des revendications 1 à 5, qui présente un arbre d'induit (36) avec un induit (38) et une roue de ventilateur (40), avec un excentrique (32) disposé sur l'arbre d'induit (36) à une extrémité de l'arbre d'induit (36), avec les étapes suivantes :
- fourniture d'un arbre d'induit (36) avec un excentrique (32) à une extrémité ;
- montage d'une première masse d'équilibrage (44) sous la forme d'un disque d'équilibrage disposé à côté de l'excentrique (32) pour équilibrer le déséquilibre de l'excentrique (32), d'un palier d'excentrique (42) sur l'excentrique (32), d'un paquet de tôle d'induit (48) avec des enroulements d'induit (50), d'une roue de ventilateur (40), d'un premier palier (52) qui est disposé sur l'arbre d'induit (36) entre la roue de ventilateur (40) et la première masse d'équilibrage (44), et d'une seconde masse d'équilibrage (46) sur l'arbre d'induit (36), dans laquelle la seconde masse d'équilibrage (46) est disposée sur une extrémité de l'arbre d'induit (36) opposée à l'excentrique (32) entre un second palier (54) et l'induit (38) et est alignée sur l'arbre d'induit (36) pour équilibrer un déséquilibre de couple causé par la distance axiale entre l'excentrique (32) et la première masse d'équilibrage (44) ;
- serrage de l'arbre d'induit (36) sur une machine d'équilibrage (56) ;
- entraînement de l'arbre d'induit (36) sur la machine d'équilibrage (44) pour l'équilibrage ;
- génération de signaux pour le préréglage de la taille et de la position d'évidement(s) (49) sur l'arbre de l'induit (36) ou sur les bagues d'équilibrage (66, 68) disposées adjacentes au paquet de tôle d'induit (48) ;
- introduction d'évidement(s) (49) dans l'arbre d'induit (36), en particulier dans le paquet de tôle d'induit (48) ou dans les bagues d'équilibrage (66, 68), en fonction des signaux, si nécessaire.

7. Procédé selon la revendication 6, dans lequel la seconde masse d'équilibrage (46) est utilisée sous la forme d'un disque d'équilibrage constitué d'un matériau électriquement non conducteur, de préférence en plastique.
